# EUROPÄISCHE PATENTSCHRIFT

(11) **EP 0 531 929 B1**
(45) Veröffentlichungstag und Bekanntmachung des Hinweises auf die Patenterteilung: **24.05.1995**
(21) Anmeldenummer: 92115329.2
(22) Anmeldetag: 08.09.1992
(51) Int. Cl.: A22C 25/16

(54) **Verfahren zur Erzeugung eines Ganzfischproduktes**
Method and device for the production of a whole-fish shaped product
Procédé et dispositif pour la production d'un produit d'aspect de poisson entier

(30) Priorität: 12.09.1991 DE 4130291
(43) Veröffentlichungstag der Anmeldung: 17.03.1993
(73) Patentinhaber: NORDISCHER MASCHINENBAU RUD. BAADER GMBH + CO KG, 23560 Lübeck (DE)
(72) Erfinder: Jahnke, Joachim, W-2400 Lübeck (DE)

(56) Entgegenhaltungen:
- DE-C- 509 733
- FR-E- 65 966
- GB-A- 676 813
- GB-A- 714 575
- GB-A- 1 534 458
- GB-A- 1 557 600
- GB-A- 2 089 642

## Beschreibung

Die Erfindung geht aus von einem Verfahren zum Herstellen eines einschließlich Kopf und Körper präsentierbaren Fischproduktes mittels einer Sequenz von Verfahrensschritten, wobei die Eingeweide und das im wesentlichen die Wirbelsäule, Rückenspeichen und Bauchspeichen umfassende Grätengerüst vollständig sowie die Kiemen mindestens zum größten Teil entnommen werden.

Ein derartiges Fischprodukt wird z. B. als "boneless rainbow trout" am Markt gehandelt. Dieses Produkt wird manuell erzeugt und stellt praktisch ein grätenfreies Filet mit Kopf und Schwanz dar, welches ein ideales Ausgangsprodukt für die verschiedensten Zubereitungen ist. Der entsprechende Bearbeitungsvorgang erfordert große Sorgfalt und ist daher sehr aufwendig. Nachteilig ist auch der bei der Bearbeitung entstehende durchschnittlich, relativ hohe Ausbeuteverlust an Fischfleisch, der seine Ursache darin hat, daß das Herausschneiden des Grätengerüstes mit "großzügig" geführten Schnitten erfolgt, um garantieren zu können, daß das Produkt "boneless" ist.

Ein maschinelles Verfahren zum Entgräten von mit dem Schwanz voraus geförderten Fischrümpfen ist aus der DE-PS 509 733 bekannt. Bei diesem Verfahren wird das Rückgrat mit den Rippen aus dem Fischrumpf herausgehoben, wobei die Rückenspeichen jedoch abgeschnitten werden, d. h. im Fischrumpf verbleiben.

Es ist die Aufgabe der Erfindung, ein maschinell durchführbares Verfahren zur Erzeugung eines Produktes der eingangs beschriebenen Art anzugeben.

Diese Aufgabe wird erfindungsgemäß durch ein Verfahren gelöst, welches gekennzeichnet ist durch die folgenden, jeweils vom Schwanzende her durchgeführten Verfahrensschritte:
Anbringen von ventralseitig und sich über die gesamte Fischlänge erstreckenden, beidseitig der Symmetrieebene des Fisches bis mindestens an die Wirbelsäule heran geführten Einschnitten, Entfernen der Eingeweide und Kiemen und Herausschneiden des Grätengerüstes durch ein Paar von der Ventralseite durch den gesamten Fisch geführter, die Rippen übergreifender, bis in die Nähe der Flossenhalter der Rückenflossen reichender und sich dort treffender Einschnitte.

Dabei kann das Entfernen der Eingeweide und Kiemen gleichzeitig mit dem Anbringen der ventralseitigen Einschnitte erfolgen.

Die mit dem erfindungsgemäßen Verfahren erzielbaren Vorteile bestehen insbesondere darin, daß das Filetfleisch mit hoher Ausbeute bei sicherer Grätenfreiheit, unter vergleichsweise geringem Kostenaufwand und als ein dem Konsumenten geläufiges Produkt gewinnbar ist, das seine maschinelle Entstehung praktisch nicht erkennen läßt.

Vorteilhafte Ausführungsmerkmale über eine Vorrichtung zur Durchführung des erfindungsgemäßen Verfahrens sind den Unteransprüchen zu entnehmen.

Nachstehend wird ein in der Zeichnung dargestelltes Ausführungsbeispiel einer Bearbeitungseinrichtung beschrieben, mit der das erfindungsgemäße Verfahren durchführbar ist.

Es zeigen
- Fig. 1: einen schematischen Aufriß der Bearbeitungseinrichtung in axonometrischer Darstellung,
- Fig. 2: einen Querschnitt durch die Einrichtung nach Fig. 1 längs der Schnittlinie II-II,
- Fig. 3: einen Querschnitt durch die Einrichtung nach Fig. 1 längs der Schnittlinie III-III.

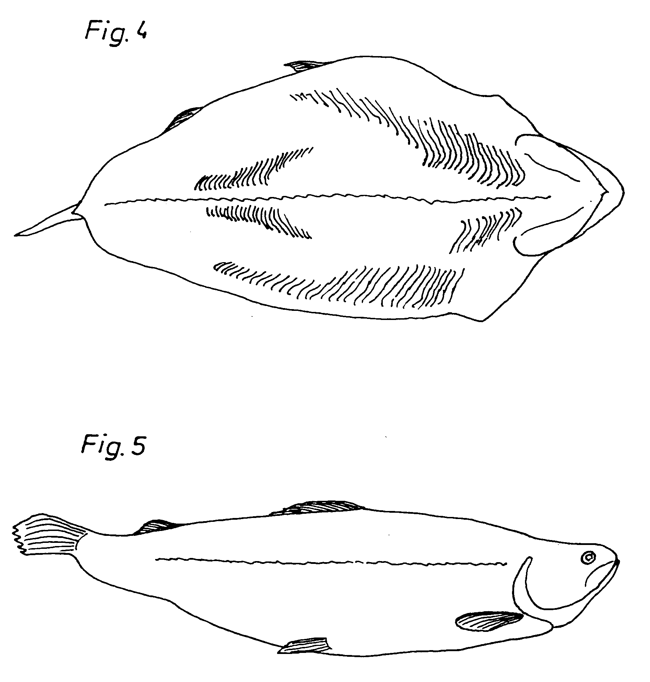

- Fig. 4: einen Fisch nach der Bearbeitung in aufgeklapptem Zustand,
- Fig. 5: den Fisch nach Fig. 4 in zugeklapptem Zustand.

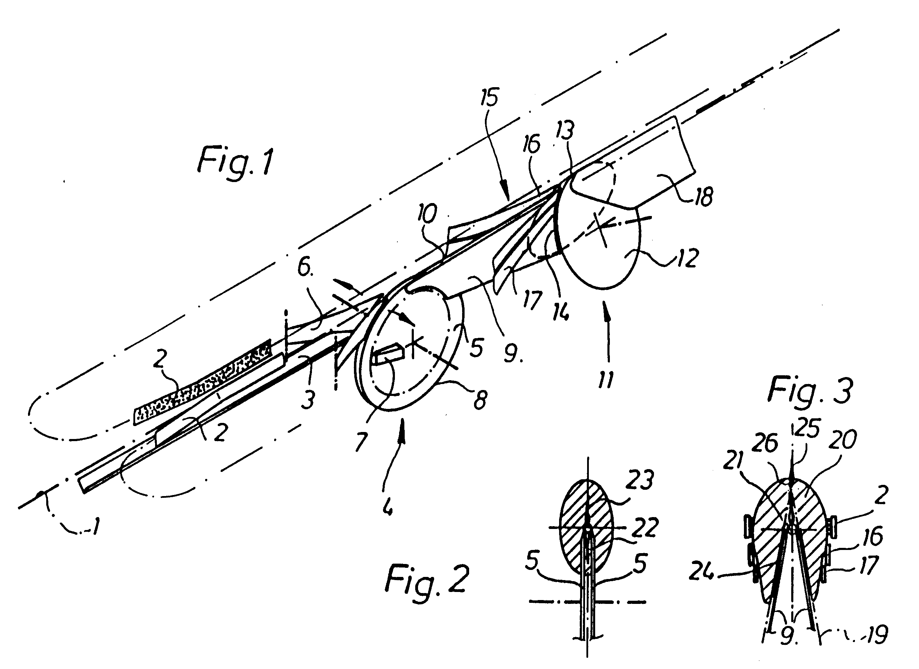

Die Einrichtung ist gemäß Fig. 1 in einem nicht gezeigten Gestell montiert und umfaßt eine Arbeitsbahn 1 , längs der ein Paar angetriebener Kratzenbandgurte 2 als Förderer verlaufen, die einander zu beiden Seiten der Arbeitsbahn gegenüberstehen und seitlich synchron ausweichbar abgestützt sind. Eingangs der Arbeitsbahn 1 befindet sich eine Beschickrinne 3 für die Aufnahme der Fische in Schwimmlage, jedoch mit dem Schwanz voraus, an die sich das erste Bearbeitungswerkzeug 4 anschließt. Es besteht aus einem Paar beabstandet zueinander angeordneter, angetriebener Kreismesser 5 zum Einschneiden des Fisches 20 zu beiden Seiten der Bauchspeichen 22 bis an die Wirbelsäule 21 heran. Für die genaue Zentrierung sorgen neben den Kratzenbandgurten 2 geeignet geformte und gegen Federn synchron nach außen ausweichbarer Führungselemente 6 , die den Fisch seitlich abstützen. Die Außenflanken der Kreismesser 5 sind mit Ausräumern 7 zum Ausräumen der Eingeweide bestückt, wobei ihre Anordnung so getroffen ist, daß sie gegenüber der Umfangsschneide 8 der Kreismesser 5 zurückstehen, ihr größter Umlaufradius also kleiner ist als der Radius der Kreismesser 5 . Letztere werden außerhalb des Umlaufradius' der Ausräumer 7 durch Bauchführungen 9 flankiert, die einen Spalt 10 zur Führung der freigeschnittenen Bauchspeichen des Fisches zwischen sich aufweisen und mit ihren oberen Führungskanten tangenial an den höchsten Punkt der Umfangsschneiden 8 der Kreismesser 5 verlaufen.

Die Bauchführungen 9 leiten über zu dem zweiten und letzten Bearbeitungswerkzeug 11 . Dieses besteht aus einem Paar in einem Winkel von etwa 30° dachförmig zueinander angeordneter, angetriebener Kreismesser 12 , die sich in ihrem Firstpunkt 13 treffen. Dabei liegt dieser um ein bestimmtes Maß oberhalb der Führungskanten der Bauchführungen 9 . Diese setzen sich bis an die Kreismesser 12 fort und sind im Arbeitsbereich derselben in gleichem Sinne dachförmig ausgeführt, wobei sie den Kreismessern 12 derart zugeordnet sind, daß zwischen den Innenflanken derselben und den Außenflanken der Bauchführungen 9 ein Spalt 14 für den Durchtritt der Rippen 24 verbleibt. Unmittelbar vor den Kreismessern 12 sind an den Flanken des Fisches angreifende Führungen 15 aus einzelnen, nach außen federnd ausweichbaren Lamellen 16 und 17 angeordnet. Den Abschluß der Einrichtung bildet ein Stützelement 18 , das dachförmig unter dem Winkel der Kreismesser 12 ausgeführt und so angeordnet ist, daß seine Firstlinie tangential an den Firstpunkt 13 der Kreismesser 12 verläuft und seine dachförmigen Stützflächen die Außenflanken der Kreismesser 12 und parallel zu der Arbeitsbahn 1 in ihrem hinteren Bereich abdecken.

Die Arbeitsweise der beschriebenen Einrichtung ist folgende:
Der zu bearbeitende Fisch 20 wird von Hand oder durch eine geeignete Beschickeinrichtung in die Beschickrinne 3 eingebracht, wobei sein Bauch nach unten und sein Schwanz voraus weist. Dabei wird er durch die Kratzenbandgurte 2 des Förderers an seinen Flanken im wesentlichen oberhalb der Seitenlinie des Fisches erfaßt und an das erste Bearbeitungswerkzeug 4 gebracht. Dank der Führung durch die Führungselemente 6 erreicht der Fisch dieses Bearbeitungswerkzeug 4 genau symmetrisch ausgerichtet, so daß seine Schwanzflosse zwischen die Kreismesser 5 gelangt und diese beginnen, beidseits der Bauchspeichen 22 einzuschneiden. Dabei ist die Schnittiefe so eingestellt, daß die Einschnitte an den Flanken der Wirbelsäule 21 enden und beim Durchgang durch die Bauchhöhle die Rippen 24 im Normalfall nicht getrennt werden. Während des Schnittverlaufes durch die Bauchhöhle werden die Eingeweide und Kiemen durch die Ausräumer 7 an den Flanken der Kreismesser 5 erfaßt und ausgeworfen. Der nunmehr in seiner ganzen Länge einschließlich des Kopfes ventralseitig eingeschnittene Fisch wird anschließend auf den Führungskanten der Bauchführungen 9 mit der freigelegten Wirbelsäule 21 reitend dem zweiten Bearbeitungswerkzeug 11 zugeführt, wobei die Bauchspeichen 22 in dem Spalt 10 zwischen den Bauchführungen 9 gleitend geführt werden. Kurz vor Erreichen dieses Werkzeuges 11 unterläuft der Fisch die gefederten Lammellen 16/17 , die bewirken, daß der Fisch unter Entkrümmen der Rippen 24 mit den Innenflächen der Bauchhöhle an die dachförmig geneigten Flanken der Bauchführungen 9 angedrückt wird (Fig. 3). Auf diese Weise werden die Kreismesser 12 in den in Fig. 3 strichpunktiert angedeuteten Schnittebenen 19 geführt und wird von den genannten Innenflächen je eine Scheibe von der Stärke des Spaltes 14 abgeschnitten, die die Rippen enthält, und gleichzeitig die Wirbelsäule 21 mit den Rückenspeichen 23 herausgeschnitten.

### Bezugszeichenliste

- 1: Arbeitsbahn
- 2: Kratzenbandgurte
- 3: Beschickrinne
- 4: erstes Bearbeitungswerkzeug
- 5: Kreismesser
- 6: Führungselement
- 7: Ausräumer
- 8: Umfangsschneide
- 9: Bauchführung
- 10: Spalt
- 11: zweites Bearbeitungswerkzeug
- 12: Kreismesser
- 13: Firstpunkt
- 14: Spalt
- 15: Führung
- 16: Lamelle
- 17: Lamelle
- 18: Stützelement
- 19: Schnittebene
- 20: Fisch
- 21: Wirbelsäule
- 22: Bauchspeichen
- 23: Rückenspeichen
- 24: Rippen
- 25: Rückenflosse
- 26: Flossenhalter

## Patentansprüche

1. Verfahren zum Herstellen eines einschließlich Kopf und Körper präsentierbaren Fischproduktes mittels einer Sequenz von Verfahrensschritten, wobei die Eingeweide und das im wesentlichen die Wirbelsäule, Rückenspeichen und Bauchspeichen umfassende Grätengerüst vollständig sowie die Kiemen mindestens zum größten Teil entnommen werden, **dadurch gekennzeichnet,** daß die Verfahrensschritte des
- Anbringens von ventralseitig und sich über die gesamte Fischlänge erstreckenden, beidseitig der Symmetrieebene des Fisches (20) bis mindestens an die Wirbelsäule (21) heran geführten Einschnitten,
- Entfernens der Eingeweide und Kiemen und
- Herausschneidens des Grätengerüstes durch ein Paar von der Ventralseite durch den gesamten Fisch geführter, die Rippen (24) übergreifender, bis in die Nähe der Flossenhalter (26) der Rückflossen (25) reichender und sich dort treffender Einschnitte
jeweils vom Schwanzende her geführt maschinell durchgeführt werden.

2. Verfahren nach Anspruch 1, **dadurch gekennzeichnet,** daß das Entfernen der Eingeweide und Kiemen gleichzeitig mit dem Anbringen der ventralen Einschnitte erfolgt.

3. Vorrichtung zum Herstellen eines einschließlich Kopf und Körper präsentierbaren Fischproduktes, wobei die Eingeweide und das im wesentlichen die Wirbelsäule, Rückenspeichen und Bauchspeichen umfassende Grätengerüst vollständig sowie die Kiemen mindestens zum größten Teil entnommen werden, **dadurch gekennzeichnet,** daß die Vorrichtung eine Sequenz mechanisch betriebener und/oder gesteuerter Werkzeuge sowie Führungen entlang einer Bearbeitungsbahn (1) sowie Transportmittel (2) für den Fisch (20) zum Fördern desselben Schwanz voraus entlang dieser Bearbeitungsbahn umfaßt, wobei die Sequenz der Werkzeuge und Führungen mindestens
a) einen Satz erster Führungen (6) in Form den Fisch seitlich abstützender und in Schwimmlage zentrierender, nach außen ausweichlicher Führungselemente;
b) einen Satz erster Messer (5) zum Anbringen von ventralseitig und sich über die gesamte Fischlänge erstreckenden, beidseitig der Symmetrieebene des Fisches im wesentlichen parallel dazu bis mindestens an die Wirbelsäule (21) heran geführten die Bauchspeichen (22) freischneidenden Einschnitten;
c) Ausräumwerkzeuge (7) zum Entfernen der Eingeweide und Kiemen;
d) einen Satz zweiter Führungen (9) zur Führung der mit den ersten Messern freigeschnittenen Bauchspeichen;
e) einen Satz zweiter in einem Winkel dachförmig zueinander angeordneten Messer (11) zum Herausschneiden des Grätengerüstes durch ein Paar von der Ventralseite durch den gesamten Fisch (20) geführter, die Rippen (24) übergreifender, bis in die Nähe der Flossenhalter (26) der Rückflossen (25) reichender und sich dort treffender Einschnitte; und
f) einen Satz dritter Führungen (18) zum teilweisen Abdecken der zweiten Messer (11)
in dieser Reihenfolge einschließt.

4. Vorrichtung nach Anspruch 3, **dadurch gekennzeichnet,** daß die Ausräumwerkzeuge (7) und die ersten Messer (5) als eine Funktionseinheit bildendes Kombinationswerkzeug zum Entfernen der Eingeweide und Kiemen gleichzeitig mit dem Anbringen der ventralen Einschnitte ausgebildet sind.

5. Vorrichtung nach Anspruch 4, **dadurch gekennzeichnet,** daß die ersten Messer als rotierende, Umfangsschneiden (8) aufweisende Kreismesser (5) mit
Außenflanken ausgebildet sind, auf denen die Ausräumwerkzeuge in Form erhabener Ausräumelemente (7) derart angeordnet sind, daß sie in radialer Richtung gegenüber den Umfangsschneiden zurückstehen.

6. Vorrichtung nach einem der Ansprüche 3 bis 5, **dadurch gekennzeichnet,** daß den zweiten, innerhalb des Fisches wirksamen Führungen (9) Außenführungen (15) zugeordnet sind, die als nach außen federnd ausweichbare, an den Außenflächen des Fisches anliegende Lamellensätze (16,17) ausgebildet sind.

7. Vorrichtung nach einem der Ansprüche 3 bis 6, **dadurch gekennzeichnet,** daß die zweiten Führungen (9) und die zweiten Messer (11) dachförmig zur Symmetrieebene des Fisches angeordnet sind, wobei obere Führungskanten der zweiten Führungen (9) jeweils im wesentlichen tangential zum höchsten Punkt der ersten Messer (5) und parallel zur Bearbeitungsbahn (1) verlaufen sowie einen Spalt (10) zwischen sich ausbilden und wobei zwischen den Außenflächen der zweiten Führungen (9) und Innenflächen der als rotierende Kreismesser (12) ausgebildeten zweiten Messer in einer Richtung quer zur Bearbeitungsbahn (1) ein Spalt (14) für den Durchtritt der Rippen (24) des Fisches vorgesehen ist.

8. Vorrichtung nach Anspruch 7, **dadurch gekennzeichnet,** daß die dritten Führungen als V-förmiges, einheitliches Stützelement (18) ausgebildet sind, dessen Firstlinie tangential vom Firstpunkt der zweiten Messer (11) verläuft und dessen dachförmige Stützflächen die Außenflanken der zweiten Messer abdecken.

## Claims

1. Method of producing a fish product, which can be offered inclusive of head and body, by a sequence of method steps, wherein the entrails and the skeleton, essentially comprising backbone, back spokes and belly spokes, are completely removed and the gills removed at least for the greatest part, characterised thereby that the method steps of
- application of incisions led on from the ventral side and extending over the entire fish length on both sides of the plane of symmetry of the fish (20) at least up to the backbone (21),
- removal of the entrails and gills and
- cutting out the skeleton by a pair of incisions guided from the ventral side through the entire fish, crossing over the ribs (24), reaching into the vicinity of the fin support (26) of the back fins (25) and meeting there,
are carried out mechanically each time from the tail end.

2. Method according to claim 1, characterised thereby that the removal of the entrails and gills takes place simultaneously with the application of the ventral incisions.

3. Device for producing a fish product, which can be offered inclusive of head and body, wherein the entrails and the skeleton, essentially comprising backbone, back spokes and belly spokes, are completely removed and the gills removed at least for the greatest part, characterised thereby that the device comprising a sequence of mechanically operated and/or controlled tools as well as guides along a processing path (1), as well as transport means (2) for the fish (20) for conveyance thereof tail foremost along this processing path, wherein the sequence of tools and guides includes at least and in the following sequential order
a) a set of first guides (6) in the form of outwardly deflectable guide elements laterally supporting the fish and centring the fish in swimming position;
b) a set of first knives (5) for the application of incisions at the ventral side which extend over the entire fish length at both sides of the plane of symmetry of the fish substantially parallel thereto and which are led on at least to the backbone (21) and cut free the belly spokes (22);
c) clearing-out tools (7) for removal of the entrails and gills;
d) a set of further guides (9) for guidance of the belly spokes cut free by the first knives;
e) a set of second knives (11), which are arranged in roof shape at an angle relative to one another, for cutting out of the skeleton by a pair of incisions guided from the ventral side through the entire fish (20), crossing over the ribs (24), reaching into the vicinity of the fin support (26) of the back fins (25) and meeting there; and
f) a set of third guides (18) for partial covering of the second knives (11).

4. Device according to claim 3, characterised thereby that the clearing-out tools (7) and the first knives (5) are constructed as a combination tool, forming a functional unit, for removal of the entrails and gills simultaneously with application of the ventral incisions.

5. Device according to claim 4, characterised thereby that the first knives are constructed as rotary circular knives (5), which have circumferential cutting edges (8), with outer flanks on which the clearing-out tools in the form of projecting clearing-out elements (7) are arranged in such a manner that they are recessed in radial direction relative to the circumferential cutting edges.

6. Device according to one of claims 3 to 5, characterised thereby that associated with the second guides (9), which are effective within the fish, are outer guides (15) which are constructed as plate sets (16, 17) bearing against the outer surfaces of the fish and resiliently deflectable in outward direction.

7. Device according to one of claims 3 to 6, characterised thereby that the second guides (9) and the second knife (11) are arranged in roof shape relative to the plane of symmetry of the fish, wherein upper guide edges of the second guides (9) extend each time substantially tangential to the highest point of the first knives (5) and parallel to the processing path (1) as well as form a gap (10) therebetween, and wherein a gap (14) for the passage of the ribs (24) of the fish is provided between the outer surfaces of the second guides (9) and inner surfaces of the second knives, which are constructed as rotary circular knives (12), and in a direction transverse to the processing path (1).

8. Device according to claim 7, characterised thereby that the third guides are constructed as a V-shaped unitary support element (18), the axis of which extends tangentially from the axis of the second knives (11) and the roof-shaped support surfaces of which cover the outer flanks of the second knives.

## Revendications

1. Procédé pour préparer un poisson sous forme d'un produit présentable incluant la tête et le corps, par une succession d'étapes opératoires, selon lequel les viscères et le squelette d'arêtes comprenant, pour l'essentiel, la colonne vertébrale, les rayons dorsaux et les rayons abdominaux, sont retirés complètement, ainsi que la plus grande partie au moins des branchies, caractérisé en ce que les étapes opératoires
- de formation d'incisions du côté ventral, s'étendant sur la longueur entière du poisson et dirigées des deux côtés du plan de symétrie du poisson (20) jusqu'à la colonne vertébrale (21) au moins,
- d'enlèvement des viscères et des branchies et
- d'extraction par découpage du squelette d'arêtes au moyen d'une paire d'incisions dirigées depuis le côté ventral à travers le poisson tout entier, embrassant les côtes (24) , parvenant jusqu'au voisinage du support (26) des nageoires dorsales (25) et se rejoignant à cet endroit,
sont chacune exécutées de façon mécanisée, en étant conduites depuis l'extrémité de la queue.

2. Procédé selon la revendication 1, caractérisé en ce que l'enlèvement des viscères et des branchies se fait en même temps que la formation des incisions ventrales.

3. Procédé pour la préparation d'un poisson sous forme d'un produit présentable incluant la tête et le corps, au cours de laquelle les viscères et le squelette d'arêtes comprenant, pour l'essentiel, la colonne vertébrale, les rayons dorsaux et les rayons abdominaux, sont retirés complètement, ainsi que la plus grande partie au moins des branchies, caractérisé en ce que le dispositif comprend une succession d'outils et de guides, actionnés et/ou commandés mécaniquement, le long d'un trajet de traitement (1), ainsi qu'un moyen de transport (2) pour le poisson, destiné à faire avancer ce dernier, queue en avant, le long de ce trajet de traitement, la succession des outils et des guides incluant au moins, dans cet ordre,
a) un jeu de premiers guides (6) sous forme d'éléments de guidage s'écartant vers l'extérieur, qui soutiennent latéralement le poisson et le centrent dans la position natatoire;
b) un jeu de premiers couteaux (5) destinés à pratiquer des incisions du côté ventral, s'étendant sur la longueur entière du poisson, dirigées des deux côtés du plan de symétrie du poisson sensiblement parallèlement à celui-ci jusqu'à la colonne vertébrale (21) au moins, et détachant par découpage les rayons abdominaux (22);
c) des outils à vider (7) destinés à enlever les viscères et les branchies;
d) un jeu de deuxièmes guides (9) destinés à guider les rayons abdominaux détachés par découpage à l'aide des premiers couteaux;
e) un jeu de deuxièmes couteaux (11), disposés l'un par rapport à l'autre sous un angle en formant un toit, pour extraire par découpage le squelette d'arêtes, au moyen d'une paire d'incisions dirigées depuis le côté ventral à travers le poisson tout entier (20), embrassant les côtes (24), parvenant jusqu'au voisinage du support (26) des nageoires dorsales (25) et se rejoignant à cet endroit; et
f) un jeu de troisièmes guides (18) pour recouvrir partiellement les deuxièmes couteaux (11).

4. Dispositif selon la revendication 3, caractérisé en ce que les outils à vider (7) et les premiers couteaux (5) sont réalisés sous la forme d'outils combinés formant une unité fonctionnelle, pour enlever les viscères et les branchies en même temps que sont pratiquées les incisions ventrales.

5. Dispositif selon la revendication 4, caractérisé en ce que les premiers couteaux sont réalisés sous la forme de couteaux circulaires rotatifs (5) présentant des tranchants périphériques (8) et comportant des flancs extérieurs sur lesquels les outils à vider, en forme d'éléments de vidage saillants (7), sont disposés d'une façon telle qu'ils soient en retrait, en direction radiale, par rapport aux tranchants périphériques.

6. Dispositif selon l'une des revendications 3 à 5, caractérisé en ce qu'aux deuxièmes guides (9) intervenant à l'intérieur du poisson, sont associés des guides extérieurs (15), qui sont réalisés sous la forme de jeux de lamelles (16, 17) pouvant être écartés élastiquement vers l'extérieur et s'appliquant sur les surfaces extérieures du poisson.

7. Dispositif selon l'une des revendications 3 à 6, caractérisé en ce que les deuxièmes guides (9) et les deuxièmes couteaux (11) sont disposés en formant un toit de part et d'autre du plan de symétrie du poisson, les arêtes de guidage supérieures des deuxièmes guides (9) s'étendant chacune sensiblement tangentiellement au point le plus haut des premiers couteaux (5) et parallèlement au trajet de traitement (1), et définissant entre elles une fente (10), tandis qu'entre les surfaces extérieures des deuxièmes guides (9) et les surfaces intérieures des deuxièmes couteaux, réalisés sous la forme de couteaux circulaires rotatifs (12), il est prévu, dans une direction transversale au trajet de traitement (1), une fente (14) pour le passage des côtes (24) du poisson.

8. Dispositif selon la revendication 7, caractérisé en ce que les troisièmes guides sont réalisés sous la forme d'éléments d'appui unitaires en forme de V (18), dont la ligne sommitale s'étend tangentiellement à partir du point sommital des deuxièmes couteaux (11) et dont les surfaces d'appui formant un toit recouvrent les flancs extérieurs des deuxièmes couteaux.
